# EUROPEAN PATENT SPECIFICATION

(11) **EP 3 248 751 B1**
(45) Date of publication and mention of the grant of the patent: **20.10.2021**
(21) Application number: 15872766.9
(22) Date of filing: 11.12.2015
(51) Int. Cl.: B29C 45/16, B29C 65/02, G01S 7/03, G01S 13/93, H01Q 1/42

(54) **METHOD FOR MANUFACTURING RADAR COVER AND RADAR COVER**
VERFAHREN ZUR HERSTELLUNG EINER RADARABDECKUNG SOWIE RADARABDECKUNG
PROCÉDÉ DE FABRICATION D'UN COUVERCLE DE RADAR ET COUVERCLE DE RADAR

(30) Priority: 26.12.2014 JP 2014264081
(43) Date of publication of application: 29.11.2017
(73) Proprietor: Faltec Co., Ltd., Kawasaki-shi, Kanagawa 212-0013 (JP)
(72) Inventor: OHTAKE, Shinichi, Kawasaki-shi Kanagawa 212-0013 (JP); ENDOH, Yoshinobu, Kawasaki-shi Kanagawa 212-0013 (JP)
(74) Representative: Troesch Scheidegger Werner AG
(86) International application number: PCT/JP2015/084843
(87) International publication number: WO 2016/104197

(56) References cited:
- JP-A- 2004 251 868
- JP-A- 2005 067 208
- JP-A- 2005 067 208
- JP-A- 2005 288 934
- JP-A- 2005 288 934
- JP-A- 2007 013 722
- JP-A- 2009 184 413
- JP-A- 2011 077 888
- JP-A- 2011 077 888
- None

## Description

### TECHNICAL FIELD

The present invention relates to a method for manufacturing a radar cover and a radar cover.

Priority is claimed on Japanese Patent Application No. 2014-264081, filed December 26, 2014.

### BACKGROUND ART

In recent years, a radar unit configured to detect an obstacle and the like in the vicinity of a vehicle using radio waves such as millimeter waves has been mounted on vehicles. Such a radar unit is arranged inside a radiator grille or an emblem provided on the front of the vehicle and transmits or receives the radio waves transmitted through the radiator grille. For this reason, in the vehicle including the radar unit as described above, the radiator grille or the emblem needs to be formed such that the radio waves can be transmitted while attenuation of the radio waves is minimized.

On the other hand, the radiator grille or the emblem is arranged on the front of the vehicle. Therefore, the radiator grille or the emblem is a very important part in view of the design of the vehicle, and metallic brightness is applied to improve the luxuriousness or texture thereof in many cases. In the related art, a plating process is generally performed to apply such metallic brightness, but radio waves are not transmitted through a plating layer. For this reason, in recent years, a technology for forming a deposited layer or a sputtered layer made of a metal through which the radio waves can be transmitted has been used to realize a constitution in which metallic brightness is provided and radio waves can be transmitted.

For example, Patent Document 1 discloses a method for manufacturing a radome (a radar cover) which has metallic brightness and through which radio waves are transmitted. In Patent Document 1, the radar cover is manufactured in a simple process by embedding a shining member through which radio waves are transmitted between a transparent layer and a colored layer using insert molding.

### PRIOR ART DOCUMENTS

### PATENT DOCUMENTS

[Patent Document 1] Japanese Unexamined Patent Application, First Publication No. 2011-46183 The document JP2011077888 discloses a method of manufacturing the radome disposed at a radar detection side for detecting obstacles around a vehicle and includes a process of forming a transparent member having a concave portion on a surface; a process of disposing in the concave portion a brightness film which has the contact surface S in contact with an inner surface of the concave portion and whose contact surface S has brightness.

### SUMMARY OF THE INVENTION

### PROBLEMS TO BE SOLVED BY THE INVENTION

However, in Patent Document 1, the shining member is accommodated inside a mold because the shining member is embedded through insert molding. For this reason, since the shining member is exposed to intense heat at a time of insert molding, a shining layer (a deposited layer or a sputtered layer) formed on a surface of the shining member may be subject to significant deformation, discoloring, or the like in some cases under an influence of heat at the time of insert molding. There is a concern that, even if significantly slight deformation, discoloring, or the like occurs in a particularly important radiator grille or emblem, it will be determined to be defective in view of design. Therefore, there is a concern that a considerable number of defective products may be generated in the method of Patent Document 1.

The present invention was made in view of the above-described circumstances, and the present invention is for the purpose of minimizing poor appearance occurring when a shining member is exposed to a high temperature and improving a yield of a radar cover.

### MEANS FOR SOLVING THE PROBLEMS

The present invention adopts the following constitution as a means for accomplishing the above-described objectives.

A method for manufacturing a radar cover which covers a radar unit configured to detect surrounding conditions of a vehicle according to a first aspect of the present invention includes: preparing a base having a recessed portion formed of a transparent layer and comprising a colored layer stacked on a part other than the recessed portion, and a shining member comprising a basal portion including a shining layer on a surface thereof and an edge portion; arranging the base and the shining member such that the edge portion of the shining member and the colored layer of the base are in contact with each other and the shining layer of the basal portion and the recessed portion face each other; and fixing the edge portion and the colored layer to each other.

The method for manufacturing the radar cover according to the above-described aspect may further include: forming the base by molding the transparent layer made of a resin material and the colored layer made of a resin material different from that of the transparent layer through two-color molding.

A protrusion made of a resin may be provided on at least one of a contact surface with the colored layer of the edge portion and a contact surface with the edge portion of the colored layer, and the edge portion may be welded to the colored layer by melting the protrusion when the edge portion and the colored layer are fixed to each other.

A radar cover which covers a radar unit configured to sense ambient conditions of a vehicle includes: a transparent layer having a recessed portion; a colored layer stacked and arranged on a part other than the recessed portion of the transparent layer; and a shining member including a basal portion having a shining layer on a surface thereof and an edge portion, and arranged on the recessed portion such that the shining layer and the recessed portion face each other, the edge portion and the colored layer being in contact with and fixed to each other.

### EFFECTS OF THE INVENTION

According to the above-described aspects of the present invention, the colored layer is stacked and arranged to avoid the recessed portion of the transparent layer. For this reason, after the colored layer is stacked and arranged on the transparent layer, the shining member can be arranged on the recessed portion.

Therefore, the shining member need not be embedded between the transparent layer and the colored layer and insert molding need not be performed. Furthermore, examples of the method of fixing the shining member to the colored layer include a welding method using ultrasonic waves or laser light, a fixing method using adhesives such as thermosetting resins, and the like. According to such methods, also in the case of fixing using heat, since local heat is input only to a fixed place, a heat load on the shining member can be significantly reduced as compared with a case in which insert molding is performed. Thus, according to the above-described aspects of the present invention, a heat load to the shining member is significantly reduced, poor appearance occurring when the shining member is exposed to a high temperature is minimized, and thus the yield of a radar cover can be improved.

### BRIEF DESCRIPTION OF THE DRAWINGS

Fig. 1 is a front view of a radiator grille including an emblem according to an embodiment of the present invention.
Fig. 2 is an enlarged front view of the emblem according to the embodiment of the present invention.
Fig. 3A is a cross-sectional view of the emblem according to the embodiment of the present invention.
Fig. 3B is a cross-sectional view of a shining member according to the embodiment of the present invention.
Fig. 4A is a schematic diagram showing a method for manufacturing the emblem according to the embodiment of the present invention.
Fig. 4B is a schematic diagram showing the method for manufacturing the emblem according to the embodiment of the present invention.
Fig. 4C is a schematic diagram showing the method for manufacturing the emblem according to the embodiment of the present invention
Fig. 4D is a schematic diagram showing the method for manufacturing the emblem according to the embodiment of the present invention.
Fig. 5A is a partially enlarged diagram of Fig. 4B.
Fig. 5B is a partially enlarged diagram of Fig. 4D.
Fig. 6A is an enlarged cross-sectional view showing a modified example of the emblem according to the embodiment of the present invention.
Fig. 6B is an enlarged cross-sectional view showing a modified example of the emblem according to the embodiment of the present invention.
Fig. 7A is a pattern diagram showing a modified example of a weld rib included in the emblem according to the embodiment of the present invention.
Fig. 7B is a pattern diagram showing a modified example of a weld rib included in the emblem according to the embodiment of the present invention.
Fig. 7C is a pattern diagram showing a modified example of a weld rib included in the emblem according to the embodiment of the present invention.
Fig. 7D is a pattern diagram showing a modified example of a weld rib included in the emblem according to the embodiment of the present invention.

### EMBODIMENTS FOR CARRYING OUT THE INVENTION

Hereinafter, a method for manufacturing a radar cover and a radar cover according to an embodiment of the present invention will be described with reference to the drawings. Note that, in the following drawings, scales of members are appropriately changed to make the members identifiable sizes.

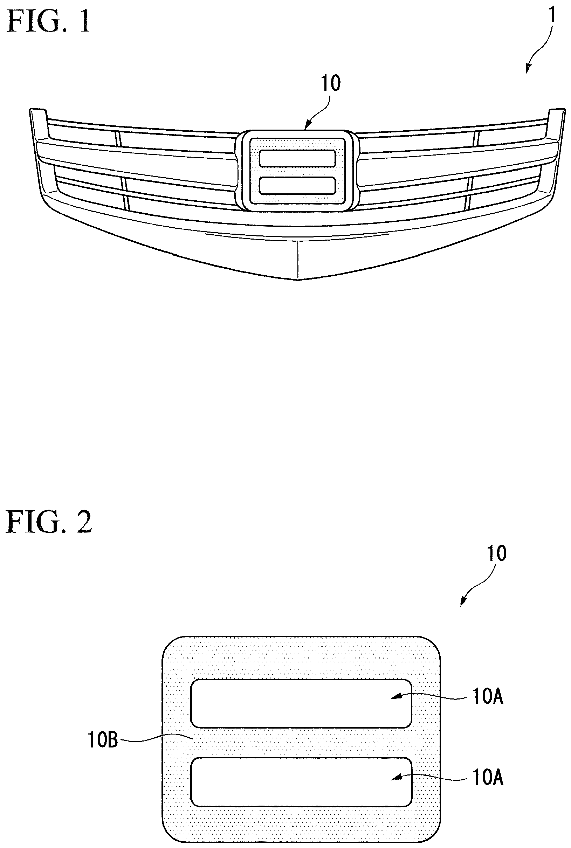

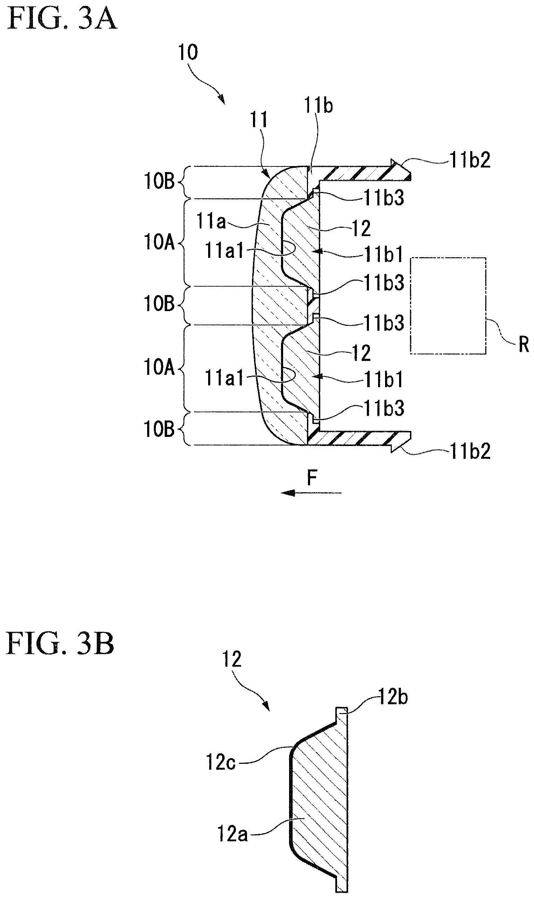

Fig. 1 is a front view of a radiator grille 1 including an emblem 10 having a radar cover according to this embodiment. Fig. 2 is an enlarged front view of the emblem 10 of this embodiment. Fig. 3A is a cross-sectional view of the emblem 10 of this embodiment. Fig. 3B is a cross-sectional view of a shining member 12 of this embodiment.

The radiator grille 1 is provided on the front of a vehicle to block an opening leading to an engine compartment of the vehicle and prevents foreign substances from entering the engine room while securing ventilation of the engine room. The emblem 10 is provided at a center of the radiator grille 1 to face a radar unit R arranged inside the engine room. The radar unit R (refer to Fig. 3A) has, for example, a transmitting unit configured to transmit millimeter waves, a receiving unit configured to receive reflected waves, a calculating unit configured to perform a calculating process, and the like. The radar unit R transmits or receives radio waves transmitted through the emblem 10 and detects the ambient conditions of the vehicle on the basis of the received radio waves. For example, the radar unit R calculates and outputs a distance from an obstacle, a speed relative to an obstacle, or the like.

The emblem 10 is arranged to cover the radar unit R when viewed from a front side of the vehicle. As shown in Fig. 2, the emblem 10 is a portion having a shining region 10A representing a figure, a letter, or the like indicating an emblem of a vehicle manufacturer and a black region 10B configured to improve visibility of the shining region 10A when viewed from the front side of the vehicle. As shown in Fig. 3A, such an emblem 10 includes a base 11 and the shining member 12.

The base 11 includes a transparent portion 11a (a transparent layer) and a black portion 11b (a colored layer). The transparent portion 11a is a portion formed of a substantially rectangular transparent material arranged on an outermost side of the vehicle. In order to increase visibility of the shining member 12 (the shining region 10A) from outside of the vehicle, a surface of the transparent portion 11a on a front side thereof is formed to be a smooth surface. Furthermore, a recessed portion 11a1 in which the shining member 12 is arranged is formed on a rear side of the transparent portion 11a. A region of a surface on the rear side of the transparent portion 11a, in which the recessed portion 11a1 is not provided, is a contact surface with which the surface on the rear side of the transparent portion 11a is in contact with the black portion 11b.

The recessed portion 11a1 is a portion configured to accommodate the shining member 12 and is constituted such that the accommodated shining member 12 can be stereoscopically viewed from the front side of the vehicle. The recessed portion 11a1 is provided along a shape of a figure, a letter, or the like such as an emblem of a vehicle manufacturer. The shining member 12 is accommodated in the recessed portion 11a1 so that the shining region 10A is formed.

The transparent portion 11a may be formed of a transparent synthetic resin such as, for example, a colorless polycarbonate (PC) or a polymethylmethacrylate resin (PMMA). Furthermore, a thickness of the transparent portion 11a may be about 1.5 mm to 10 mm. A hard coat treatment used to prevent scratches or a clear coat treatment with a urethane-based paint may be performed on the surface of the transparent portion 11a on the front side thereof if necessary. Such scratch prevention processes are unnecessary as long as the resins are transparent synthetic resins capable of having scratch resistance.

The black portion 11b is a layer stacked and arranged on the surface of the transparent portion 11a on the rear side thereof and is a portion formed of a black material. As shown in Fig. 3A, the black portion 11b is stacked and arranged on the transparent portion 11a (a portion other than the recessed portion 11a1 of the transparent portion 11a) to avoid the recessed portion 11a1. In other words, the black portion 11b has an opening 11b1 to expose the recessed portion 11a1 and is stacked and arranged on the rear side of the transparent portion 11a such that the opening 11b1 overlaps the recessed portion 11a1. Furthermore, a step portion 11b3 is provided at an edge portion of the opening 11b1 in the black portion 11b. The step portion 11b3 is a portion which is formed such that a region along the opening 11b1 of the black portion 11b is thinner than other regions and to which a flange 12b (which will be described later) of the shining member 12 is fixed. Furthermore, the black portion 11b has an engaging portion 11b2 protruding toward the engine room. A distal end portion of the engaging portion 11b2 is formed in a claw shape, and the distal end portion thereof is locked to, for example, a radiator grille main body.

As described above, the black portion 11b stacked and arranged on the surface of the transparent portion 11a at the rear side thereof can be seen from the outside of the transparent portion 11a and forms the above-described black region 10B. In other words, a region of the black portion 11b other than the shining region 10A is black when viewed, and thus visibility of the shining region 10A is relatively improved.

The black portion 11b may be made of a synthetic resin such as an acrylonitrile butadiene styrene copolymer resin (ABS), an acrylonitrile ethylene styrene copolymer resin (AES), an acrylonitrile styrene acrylate (ASA), polybutylene terephthalate (PBT), a colored PC and polyethylene terephthalate (PET) or a composite resin thereof. Furthermore, a thickness of the black portion 11b may be about 0.5 mm to 10 mm.

The base 11 having the transparent portion 11a and the black portion 11b is formed through two-color molding. For example, the transparent portion 11a is previously formed, and the black portion 11b is formed at the surface of the previously-formed transparent portion 11a at the rear side thereof to avoid the recessed portion 11a1. The base 11 formed by integrating the transparent portion 11a and the black portion 11b can be easily formed through such two-color molding. Here, a method for forming the base 11 is not limited to two-color molding. In addition, for example, the transparent portion 11a and the black portion 11b may be separately injection-molded, and the separate transparent portion 11a and black portion 11b may be fixed together using an adhesive or welding so that the base 11 can also be formed.

As shown in Figs. 3A and 3B, the shining member 12 includes a basal portion 12a, the flange 12b, and a shining layer 12c. The basal portion 12a and the flange 12b are integrally formed through injection molding or the like and are formed of a synthetic resin such as, for example, ABS, PC, or PET. The basal portion 12a is a portion with which the shining member is installed inside the recessed portion 11a1 and thus the recessed portion 11a1 is embedded. The basal portion 12a is formed such that the shining layer 12c formed at a surface thereof and an inner wall surface of the recessed portion 11a1 are in contact with each other (the shining layer 12c and the recessed portion 11a1 face each other). The flange 12b is formed to surround the basal portion 12a and forms an edge portion of the shining member 12. The flange 12b is a portion that is in contact with the step portion 11b3 provided at the black portion 11b. As shown in Figs. 3A and 3B, the basal portion 12a is provided to protrude to a position closer to the transparent portion 11a side than the flange 12b.

The shining layer 12c is formed at a surface of the basal portion 12a at a front side thereof (a surface at the transparent portion 11a side) and is a layer with metallic brightness. The shining layer 12c is formed by stacking, for example, metal layers formed using a metal vapor deposition treatment and a base coat layer and a top coat layer (neither is shown) configured to protect the metal layers. A vacuum deposition method or sputtering is used for a vapor deposition treatment, and indium, aluminum, tin, or the like is used as a metal to be deposited. The base coat layer and the top coat layer are formed through vapor deposition treatment and protect the thin and brittle metal layers. The base coat layer and the top coat layer are formed through clear coating using a transparent (including colored transparent) synthetic resin. The metal layers of the shining layer 12c are very thin and have a plurality of gaps which cannot be seen with the naked eye, and therefore have sufficient radio wave transmission performance. The shining layer 12c is not limited to the shining layer 12c formed through the above-described method and may be formed through a coating method or another method such that it has a sufficient radio wave transmission performance and metallic brightness.

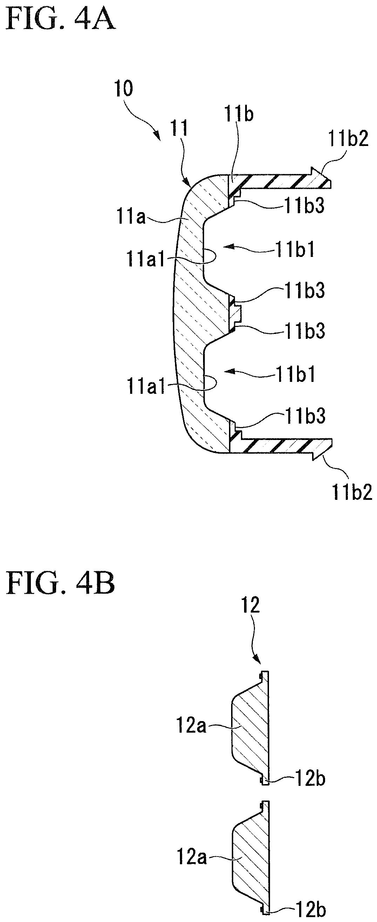

Next, a method for manufacturing the emblem 10 of this embodiment will be described. Figs. 4A to 4D are schematic diagrams showing the method for manufacturing the emblem 10 of this embodiment.

Fig. 4A is the schematic diagram showing a base forming step. As shown in Fig. 4A, in the base forming step, the base 11 is formed. For example, first, the transparent portion 11a is formed using a first mold (not shown) through injection molding. Subsequently, the black portion 11b is stacked and arranged on the transparent portion 11a through injection molding using a second mold (not shown). In other words, the transparent portion 11a made of a resin material and the black portion 11b made of a resin material having a color different from that of the transparent portion 1 1a are integrally formed through two-color molding. At this time, when the transparent portion 11a is formed using the first mold, the recessed portion 11a1 is formed at the transparent portion 11a. Furthermore, when the black portion 11b is formed using the second mold, the black portion 11b is formed to avoid the recessed portion 11a1.

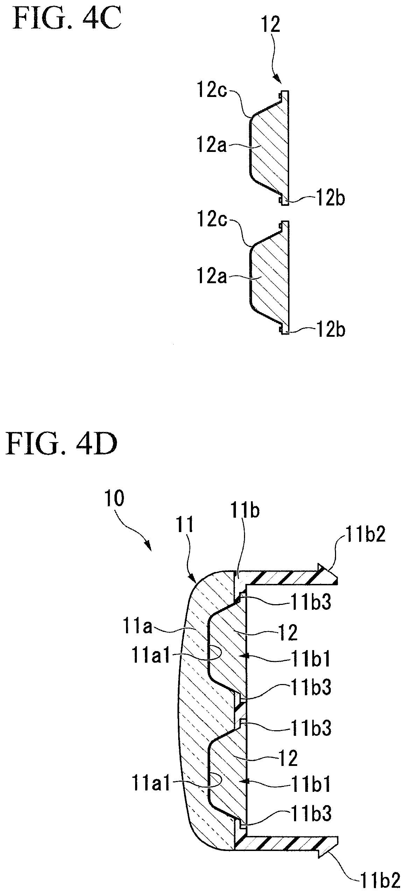

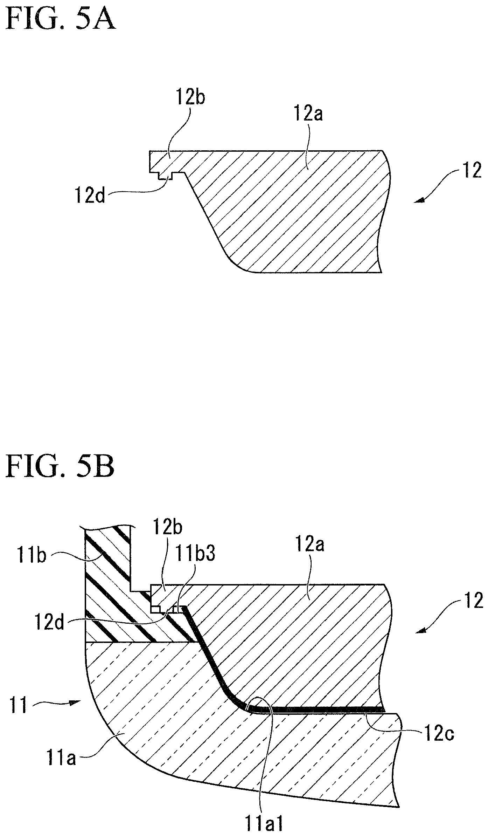

Figs. 4B and 4C are schematic diagrams showing a shining member forming step. In the shining member forming step, first, as shown in Fig. 4B, the basal portion 12a and the flange 12b are integrally formed through injection molding. At this time, as shown in Fig. 5A serving as a partially enlarged diagram of Fig. 4B, a weld rib 12d (a resinous protrusion) is provided at a surface which is in contact with the transparent portion 11a of the flange 12b. The weld rib 12d is a portion which is provided, for example, in an annular shape to surround the basal portion 12a and is melted to weld the transparent portion 11a and the flange 12b in a later process.

Subsequently, in the shining member forming step, as shown in Fig. 4C, the shining layer 12c is formed at the surface of the basal portion 12a at the front side thereof. Here, for example, the base coat layer, a metal layer, and the top coat layer are formed in this order from the basal portion 12a side so that the shining layer 12c is formed. The base coat layer and the top coat layer are formed through, for example, clear coating using a transparent synthetic resin, and the metal layer is formed through metal vapor deposition treatment.

A surface of the flange 12b at a front side thereof (the surface of the vehicle at the front side thereof) is in contact with the black portion 11b. Thus, the surface of the flange 12b at the front side thereof cannot be visually seen from the outside through the transparent portion 11a. For this reason, the shining layer 12c need not be formed at the surface of the flange 12b at the front side thereof. Therefore, when the shining layer 12c is formed, a surface of the flange 12b may be masked. Here, the shining layer 12c is thin and is peeled off by heat in a step, which will be performed later, in which the transparent portion 11a and the flange 12b are welded. Therefore, it is preferable to form the shining layer 12c also at the surface of the flange 12b at the front side thereof without using a mask, because it is easy and convenient.

Also, the base forming step shown in Fig. 4A and the shining member forming step shown in Figs. 4B and 4C are operation processes which can be processed independently. For this reason, in order to shorten the manufacturing time, the base forming step and the shining member forming step are preferably performed in parallel.

Fig. 4D is a schematic diagram showing a shining member arrangement step. As shown in Fig. 4D, in the shining member arrangement step, first, the shining member 12 formed in the above-described shining member forming step is arranged to be accommodated in the recessed portion 11a1 of the base 11 formed in the above-described base forming step. At this time, as shown in Fig. 5B, the shining member 12 is arranged on the recessed portion 11a1 such that the weld rib 12d of the shining member 12 is in contact with the step portion 11b3 included in the black portion 11b of the base 11 (an arrangement step).

Subsequently, the shining member 12 is welded to the black portion 11b by melting the weld rib 12d (a fixing step). If the weld rib 12d is melted, the weld rib 12d is melted and spreads so that the shining member 12 approaches the transparent portion 11a side. Thus, the shining layer 12c comes in contact with the inner wall surface of the recessed portion 11a1.

Here, for example, the shining member 12 is welded to the black portion 11b, for example, through an ultrasonic welding method, a laser transmission welding method, or the like. When an ultrasonic welding method is used, for example, ultrasonic vibrations are applied to the shining member 12 and thus frictional heat occurs at an interface between the weld rib 12d and the black portion 11b due to such vibrations. In addition, the weld rib 12d is melted due to such frictional heat. After that, the shining member 12 is cooled and thereby welded to the black portion 11b. Furthermore, in the laser transmission welding method, for example, the shining member 12 is formed of a material through which laser light is transmitted. The weld rib 12d is irradiated with laser light from a rear side of the shining member 12 so that the weld rib 12d is melted. After that, the shining member 12 is cooled and thereby welded to the black portion 11b.

The emblem 10 according to this embodiment is manufactured through the above-described process. According to the emblem 10 and the method for manufacturing the emblem 10 according to this embodiment, the black portion 11b is stacked and arranged to avoid the recessed portion 11a1 of the transparent portion 11a. For this reason, after the black portion 11b is stacked and arranged on the transparent portion 11a, the shining member 12 can be arranged on the recessed portion 11a1. Therefore, the shining member 12 need not be embedded between the transparent portion 11a and the black portion 11b such that the shining member 12 is sandwiched by the transparent portion 11a and the black portion 11b, and thus insert molding need not be performed. Furthermore, the fixing of the shining member 12 to the black portion 11b can be performed through a welding method using ultrasonic waves or laser light.

According to such methods, since local heat is input only to a fixed place, a heat load to the shining member 12 (that is, the shining layer 12c) can be significantly reduced as compared with a case in which the insert molding is performed. Thus, according to the emblem 10 and the method for manufacturing the emblem 10 according to this embodiment, a heat load to the shining member 12 is significantly reduced, poor appearance occurring when the shining member 12 is exposed to a high temperature is minimized, and thus the yield of the emblem 10 can be improved.

Also, in the method for manufacturing the emblem 10 according to this embodiment, in the base forming step, the base 11 is formed by molding the transparent portion 11a made of the resin material and the black portion 11b made of a resin material having a color different from that of the transparent portion 11a through two-color molding. For this reason, the transparent portion 11a and the black portion 11b can be easily integrated together, and thus the base 11 can be formed for a short period of time.

In the method for manufacturing the emblem 10 according to this embodiment, the shining member 12 is arranged on the recessed portion 11a1 and the flange 12b of the shining member 12 is fixed to the black portion 11b in a state in which the flange 12b of the shining member 12 is brought into contact with the black portion 11b from a side which is opposite to the transparent portion 11a. For this reason, only a portion of the shining member 12 (that is, the flange 12b) may be fixed to the black portion 11b, and the influence on the shining layer 12c at the time of fixing can be further reduced.

In the method for manufacturing the emblem 10 according to this embodiment, the weld rib 12d is provided on the surface of the flange 12b of the shining member 12 which come into contact with the black portion 11b. In addition, the shining member 12 is welded to the black portion 11b by melting the weld rib 12d. For this reason, the flange 12b itself need not be directly heated, and thus sinking can be prevented from occurring on the flange 12b and the like.

Although a preferred embodiment of the present invention has been described above with reference to the accompanying drawings, the present invention is not limited to the above-described embodiment. The shapes, the combinations, and the like of the constituent elements shown in the above-described embodiment are merely examples and can be modified into various forms on the basis of design requirements without departing from the gist of the present invention.

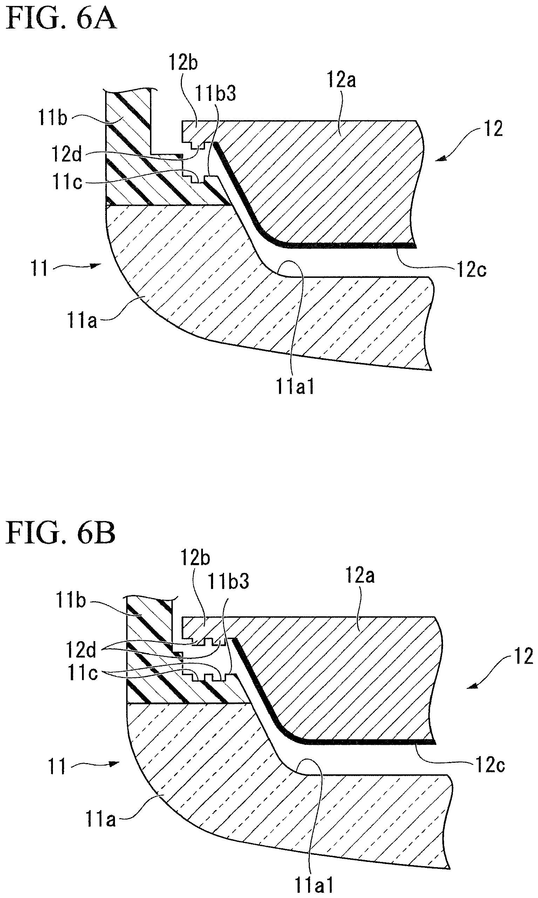

For example, in the above-described embodiment, a constitution in which the contact surface of the black portion 11b with which the flange 12b is brought into contact is a plane has been described. However, the present invention is not limited thereto. In addition, for example, as shown in Fig. 6A, a groove 11c with which the weld rib 12d is engaged may be provided. Such a groove 11c is provided so that positioning of the shining member 12 before welding can be easily performed. The weld rib may be provided at the black portion 11b side.

As shown in Fig. 6B, a plurality of weld ribs 12d and a plurality of grooves 11c may be provided. At this time, the groove 11c is not essential, and the contact surface of the black portion 11b may be set to be a plane as in the above-described embodiment. As described above, the plurality of the weld ribs 12d are provided so that the shining member 12 can be more firmly fixed to the black portion 11b. In the emblem 10 according to the above-described embodiment, a member configured to hold down the surface of the shining member 12 at the rear side thereof is not provided. Thus, the shining member 12 is more firmly fixed to the black portion 11b as described above so that peeling-off or the like of the shining member 12 can be reliably prevented. Furthermore, as described above, whatever welding method is used to more firmly fix the shining member 12 to the black portion 11b, welding is preferably performed while the shining member 12 is pressed against the black portion 11b side.

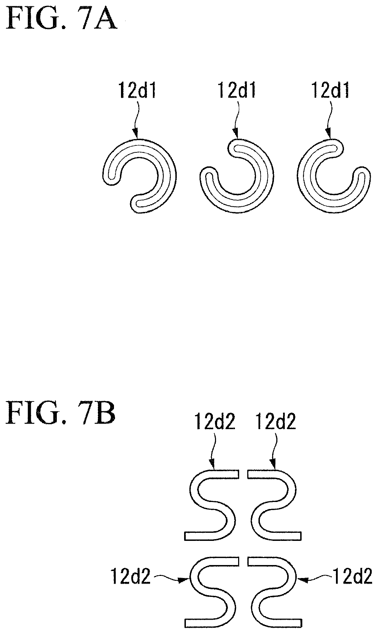

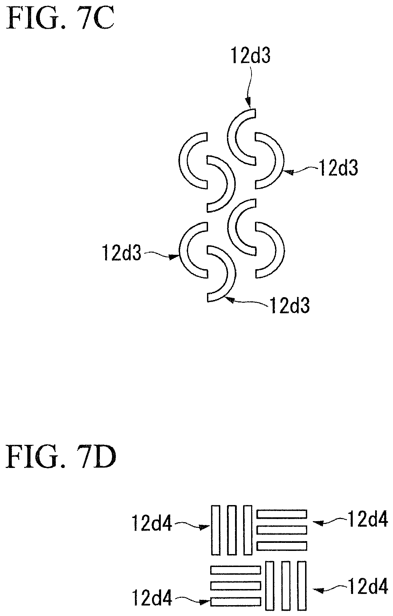

In the above-described embodiment, the constitution having the weld rib 12d formed in an annular shape to surround the basal portion 12a of the shining member 12 has been adopted. However, the present invention is not limited thereto. For example, as shown in Fig. 7A, a constitution in which a plurality of C-shaped weld ribs 12d1 are arranged along the flange 12b while a notch direction changes can also be adopted. Furthermore, as shown in Fig. 7B, a constitution in which a plurality of substantially S-shaped weld ribs 12d2 are arranged along the flange 12b while changing postures can also be adopted. As shown in Fig. 7C, a constitution in which a plurality of semicircular-arc-shaped weld ribs 12d3 are arranged along the flange 12b while changing postures can also be adopted. As shown in Fig. 7D, a constitution in which a plurality of weld ribs 12d4 constituted of three bar-shaped portions disposed in parallel are arranged along the flange 12b while changing postures can also be adopted. According to the weld ribs 12d1 to 12d4 as described above, the weld ribs are arranged to have various postures. Thus, wet-spreading at a time of melting can be uniformized, and thus occurrence of a sink in the flange 12b can be prevented.

In the above-described embodiment, a constitution in which the black portion 11b and the shining member 12 are welded to each other has been described. However, the present invention is not limited thereto, and a constitution in which the black portion 11b and the shining member 12 are fixed to each other using an adhesive can also be adopted.

In the above-described embodiment, a constitution in which the transparent portion 11a and the black portion 11b are integrally formed through twocolor molding has been adopted. However, the present invention is not limited thereto, and for example, the transparent portion 11a and the black portion 11b may be fixed to each other using an adhesive or the like.

Also, a constitution in which a colored portion (a colored layer) with another color is used rather than the black portion 11b can also be adopted.

In the above-described embodiment, a constitution in which the radar cover of the present invention is the emblem 10 has been described. However, the present invention is not limited thereto. For example, a constitution in which another portion or all of a radiator grille are set as the radar cover of the present invention can also be adopted.

### DESCRIPTION OF REFERENCE NUMERAL

1 Radiator grille 10 Emblem (radar cover) 11 Base 11a Transparent portion (transparent layer) 11a1 Recessed portion 11b Black portion (colored layer) 12 Shining member 12a Basal portion 12b Flange (edge portion) 12c Shining layer 12d Weld rib 12d1 to 12d4 Weld rib

## Claims

1. A method for manufacturing a radar cover which covers a radar unit configured to detect surrounding conditions of a vehicle, the method comprising:
preparing a base (11) and a shining member (12), the base (11) having a transparent portion (11a) and a black portion (11b), the transparent portion (11a) having a recessed portion (11a1), the black portion (11b) being stacked on the transparent portion (11a) on a portion other than the recessed portion (11a1), the shining member (12) comprising a basal portion (12a) and an edge portion (12b), the basal portion (12a) including a shining layer (12c) on a surface thereof, the edge portion (12b) being formed to surround the basal portion (12a);
arranging the base (11) and the shining member (12) such that the edge portion (12b) of the shining member (12) and the black portion (11b) of the base (11) are in contact with each other and the shining layer (12c) of the basal portion (12a) and the recessed portion (11a1) face each other; and
fixing the edge portion (12b) and the black portion (11b) to each other.

2. The method for manufacturing the radar cover according to claim 1, further comprising:
forming the base (11) by molding the transparent portion (11a) made of a resin material and the black portion (11b) made of a resin material different from that of the transparent portion (11a) through two-color molding.

3. The method for manufacturing the radar cover according to claim 1 or 2, wherein
a protrusion made of a resin is provided on at least one of a contact surface with the black portion (11b) of the edge portion and a contact surface with the edge portion of the black portion (11b), and
the edge portion is welded to the black portion (11b) by melting the protrusion when the edge portion and the black portion (11b) are fixed to each other.

4. The method for manufacturing the radar cover according to any one of claims 1 to 3, wherein
the edge portion is a flange.

5. The method for manufacturing the radar cover according to claim 4, wherein
the flange has a surface at a front side of the flange, and
the surface is in contact with the black portion.

6. A radar cover which covers a radar unit configured to detect surrounding conditions of a vehicle, the radar cover comprising:
a base (11) comprising: a transparent portion (11a) having a recessed portion (11a1); and a black
portion (11b) stacked and arranged on a portion other than the recessed portion; and
a shining member (12) including a basal portion (12a) and an edge portion (12b), the basal portion having a
shining layer (12c) on a surface thereof, the edge portion being formed to surround the basal portion, the shining member being arranged on the recessed portion such that the shining layer (12c) and the recessed portion face each other, the edge portion and the black portion (11b) being in contact with and fixed to each other.

7. The method according to claim 1, wherein the method is a method for manufacturing the radar cover according to claim 6, wherein
the edge portion is a flange.

8. The method according to claim 7, wherein
the flange has a surface at a front side of the flange, and
the surface is in contact with the black portion (11b).

## Patentansprüche

1. Verfahren zum Fertigen einer Radarabdeckung, welche eine Radareinheit abdeckt, die zum Erfassen von Umgebungsverhältnissen eines Fahrzeugs ausgelegt ist, wobei das Verfahren umfasst:
Herstellen einer Basis (11) und eines glänzenden Teils (12), wobei die Basis (11) einen transparenten Abschnitt (11a) und einen schwarzen Abschnitt (11b) aufweist, wobei der transparente Abschnitt (11a) einen versenkten Abschnitt (11a1) aufweist, der schwarze Abschnitt (11b) an einem anderen Abschnitt als dem versenkten Abschnitt (11a1) an dem transparenten Abschnitt (11a) gelagert ist, das glänzende Teil (12) einen Stammabschnitt (12a) und einen Randabschnitt (12b) aufweist, wobei der Stammabschnitt (12a) eine glänzende Schicht (12c) auf einer Oberfläche davon aufweist, wobei der Randabschnitt (12b) derart geformt ist, dass er den Stammabschnitt (12a) umgibt;
Anordnen der Basis (11) und des glänzenden Teils (12) derart, dass der Randabschnitt (12b) des glänzenden Teils (12) und der schwarze Abschnitt (11b) der Basis (11) miteinander in Berührung stehen und die glänzende Schicht (12c) des Stammabschnitts (12a) und der versenkte Abschnitt (11a1) einander zugewandt sind; und
Befestigen des Randabschnitts (12b) und des schwarzen Abschnitts (11b) aneinander.

2. Verfahren zum Fertigen der Radarabdeckung nach Anspruch 1, weiterhin umfassend:
Ausbilden der Basis (11) durch Gießen des transparenten Abschnitts (11a), der aus einem Harzmaterial besteht, und des schwarzen Abschnitts (11b), welcher aus einem anderen Harzmaterial als jenem des transparenten Abschnitts (11a) besteht, mittels Zweifarbenguss.

3. Verfahren zum Fertigen der Radarabdeckung nach Anspruch 1 oder 2, wobei
ein aus Harz bestehender Vorsprung an wenigstens einer von einer Kontaktfläche mit dem schwarzen Abschnitt (11b) des Randabschnitts und einer Kontaktfläche mit dem Randabschnitt des schwarzen Abschnitts (11b) bereitgestellt ist, und
der Randabschnitt durch Aufschmelzen des Vorsprungs, wenn der Randabschnitt und der schwarze Abschnitt (11b) aneinander befestigt werden, an den schwarzen Abschnitt (11b) geschweißt wird.

4. Verfahren zum Fertigen der Radarabdeckung nach einem der Ansprüche 1 bis 3, wobei
der Randabschnitt ein Flansch ist.

5. Verfahren zum Fertigen der Radarabdeckung nach Anspruch 4, wobei
der Flansch eine Oberfläche an einer vorderen Seite des Flanschs aufweist, und
die Oberfläche mit dem schwarzen Abschnitt in Berührung steht.

6. Radarabdeckung, welche eine Radareinheit abdeckt, die zum Erfassen von Umgebungsverhältnissen eines Fahrzeugs ausgelegt ist, wobei die Radarabdeckung umfasst:
eine Basis (11), umfassend: einen transparenten Abschnitt (11a) mit einem versenkten Abschnitt (11a1); und
einen schwarzen Abschnitt (11b), der an einem anderen Abschnitt als dem versenkten Abschnitt gelagert und angeordnet ist; und
ein glänzendes Teil (12), aufweisend einen Stammabschnitt (12a) und einen Randabschnitt (12b), wobei der Stammabschnitt eine glänzende Schicht (12c) auf einer Oberfläche davon aufweist, der Randabschnitt derart geformt ist, dass er den Stammabschnitt umgibt, das glänzende Teil an dem versenkten Abschnitt angeordnet ist, sodass die glänzende Schicht (12c) und der versenkte Abschnitt einander zugewandt sind, wobei der Randabschnitt und der schwarze Abschnitt (11b) miteinander in Berührung stehen und aneinander befestigt sind.

7. Verfahren nach Anspruch 1, wobei das Verfahren ein Verfahren zum Fertigen der Radarabdeckung nach Anspruch 6 ist, wobei
der Randabschnitt ein Flansch ist.

8. Verfahren nach Anspruch 7, wobei
der Flansch eine Oberfläche an einer vorderen Seite des Flanschs aufweist, und
die Oberfläche mit dem schwarzen Abschnitt (11b) in Berührung steht.

## Revendications

1. Procédé pour fabriquer une enceinte de recouvrement de radar recouvrant une unité de radar configurée pour détecter les conditions environnantes d'un véhicule, le procédé consistant à :
- préparer une base (11) et un élément brillant (12), la base (11) présentant une partie transparente (11a) et une partie noire (11b), la partie transparente (11a) ayant une partie renfoncée (11a1), la partie noire (11b) étant posée sur la partie transparente (11a) sur une partie autre que la partie renfoncée (11a1), l'élément brillant (12) comprenant une partie de base (12a) et une partie de bord (12b), la partie de base (12a) comprenant une couche brillant (12c) sur une surface de cette dernière, la partie de bord (12b) étant formée pour venir entourer la partie de base (12a) ;
- disposer la base (11) et l'élément brillant (12) de façon à ce que la partie de bord (12b) de l'élément brillant (12) et la partie noire (11b) de la base (11) soient en contact l'une avec l'autre, et que la couche brillant (12c) de la partie de base (12a) et la partie renfoncée (11a1) soient en face l'une de l'autre ; et
- fixer la partie de bord (12b) et la parte noire (11b) l'une à l'autre.

2. Procédé pour fabriquer l'enceinte de recouvrement de radar selon la revendication 1, consistant en outre à :
- former la base (11) en moulant la partie transparente (11a) faite en un matériau de résine, et la partie noire (11b) faite en un matériau de résine différent de celui de la partie transparente (11a) par un moulage bicolore.

3. Procédé pour fabriquer l'enceinte de recouvrement de radar selon la revendication 1ou 2, dans lequel il est prévu une saillie constituée de résine sur au moins une surface de contact avec la partie noire (11b) de la partie de bord et une surface de contact avec la partie de bord de la partie noire (11b), et dans lequel la partie de bord est soudée à la partie noire (11b) par fusion de la saillie lorsque la partie de bord et la partie noire (11b) sont fixées l'une à l'autre.

4. Procédé pour fabriquer l'enceinte de recouvrement de radar selon l'une des revendications 1à 3, dans lequel la partie de bord est une bride.

5. Procédé pour fabriquer l'enceinte de recouvrement de radar selon la revendication 4, dans lequel la bride a une surface sur un côté frontal de la bride, et dans lequel la surface est en contact avec la partie noire.

6. Enceinte de recouvrement de radar recouvrant une unité de radar configurée pour détecter les conditions environnantes d'un véhicule, l'enceinte de recouvrement de radar comprenant :
- une base (11) comprenant: une partie transparente (11a) ayant une partie renfoncée (11a1) ; et une partie noire (11b) superposée et disposée sur une partie autre que la partie renfoncée ; et un élément brillant (12) comprenant une partie de base (12a) et une partie de bord (12b), la partie de base ayant une couche brillant (12c) sur une surface de cette dernière, la partie de bord étant formée pour venir entourer la partie de base, l'élément brillant étant disposé sur la partie renfoncée de telle sorte que la couche brillant (12c) et la partie renfoncée sont en face l'une de l'autre, la partie de bord et la partie noire (11b) étant en contact et fixées l'une à l'autre.

7. Procédé selon la revendication 1, dans lequel le procédé est un procédé pour fabriquer l'enceinte de recouvrement de radar selon la revendication 6, dans lequel la partie de bord est une bride.

8. Procédé selon la revendication 7, dans lequel la bride a une surface au niveau d'un côté frontal de la bride, et dans lequel la surface est en contact avec la partie noire (11b).
